Europäisches Patentamt

European Patent Office

Office européen des brevets

(11) Numéro de publication : **0 053 559**
**B1**

(12) # FASCICULE DE BREVET EUROPÉEN

(45) Date de publication du fascicule du brevet :
25.07.84

(51) Int. Cl.³ : **B 62 D   5/08**

(21) Numéro de dépôt : 81401887.5

(22) Date de dépôt : 27.11.81

(54) **Dispositif de distribution, notamment pour système de direction assistée.**

(30) Priorité : 02.12.80 FR 8025545

(43) Date de publication de la demande :
09.06.82 Bulletin 82/23

(45) Mention de la délivrance du brevet :
25.07.84 Bulletin 84/30

(84) Etats contractants désignés :
DE GB IT SE

(56) Documents cités :
FR-A- 2 160 548
FR-A- 2 437 968
FR-A- 2 445 255

(73) Titulaire : **SOCIETE ANONYME D.B.A.**
**Centre Paris Pleyel**
**F-93521 St-Denis Cedex 01 (FR)**

(72) Inventeur : **Kervagoret, Gilbert**
**5 impasse Nobleterre**
**F-95100 Argenteuil (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

L'invention concerne un dispositif de distribution pour servomécanisme hydraulique et notamment une valve de distribution pour un système de direction assistée d'un véhicule automobile, dont la structure de distribution est extrêmement simple du point de vue de la fabrication.

On connaît, notamment du document EP-A-0 012 043, un dispositif de distribution pour servo-mécanisme comportant deux éléments de distribution de fluide, cylindriques, coaxiaux, susceptibles d'une rotation relative limitée autour de leur axe commun et comportant des ouvertures et cavités définissant un circuit de circulation de fluide entre une source de fluide et un réservoir de fluide. Plus précisément, le circuit de circulation de fluide est défini par la coopération de rainures longitudinales pratiquées à la surface cylindrique externe de l'élément de distribution interne ou rotor avec des ouvertures pratiquées au travers de la paroi de l'élément de distribution externe ou stator. Certaines des ouvertures pratiquées dans le stator sont de larges fenêtres sensiblement rectangulaires dont deux bordures opposées coopèrent avec deux bordures de rainures adjacentes du rotor, l'une des rainures communiquant avec la source de fluide et l'autre rainure communiquant avec le réservoir. Ces fenêtres rectangulaires nécessitent un usinage précis par électro-érosion, relativement coûteux et délicat à mettre en œuvre dans une chaîne de fabrication en grandes quantités. En particulier, les deux bordures opposées de la fenêtre rectangulaire doivent avoir un profil particulier déterminant la caractéristique Pression-Angle de rotation relative, du distributeur. La présente invention découle de la constatation selon laquelle il est possible d'obtenir une caractéristique du distributeur comparable en remplaçant la fenêtre sensiblement rectangulaire par une combinaison de trous à contour circulaire.

Le document FR-A-2 160 548 prévoit par ailleurs un distributeur hydraulique permettant d'obtenir une loi de variation voulue entre l'accroissement de pression et l'angle de rotation relative par des trous circulaires agencés en parallèle dans une même branche de circuit et ayant des sections d'écoulement différentes.

Plus précisément, la présente invention concerne donc un dispositif de distribution hydraulique pour servo-mécanisme, notamment pour direction assistée, du type comportant deux éléments de distribution de fluide, cylindriques, coaxiaux et susceptibles d'une rotation relative limitée autour de leur axe commun, d'une part et d'autre d'une position relative neutre, ces éléments de distribution comportant des ouvertures et cavités définissant un circuit de circulation de fluide connectable entre une source de fluide et un réservoir de fluide, ce circuit comportant deux branches de distribution agencées en parallèle, munies de passages à section variable définis dans une surface cylindrique de contacts desdits éléments de distribution et comportant notamment dans chaque branche deux types de passages à sens de variation d'ouverture inversés pour un sens quelconque de ladite rotation relative au-delà de ladite position relative neutre, des passages de ces deux types communiquant avec une prise de pression de travail de la branche considérée, caractérisé en ce que les passages à section variable précités sont tous matérialisés par le chevauchement partiel de rainures longitudinales creusées dans une surface cylindrique de l'un des éléments de distribution et de trous à contour circulaire pratiqués radialement au travers de l'autre élément de distribution, et en ce que des passages d'un même type sont agencés en parallèle dans une même branche dudit circuit avec des sections d'écoulement différentes au moins pour une plage de rotation relative entre les deux éléments de distribution autour de ladite position relative neutre, pour obtenir une loi de variation voulue entre l'accroissement de pression disponible à l'une desdites prises de pression et l'angle de rotation relative dans le sens correspondant.

Ces caractéristiques apparaissent également dans un agencement de distributeur particulier faisant l'objet de la demande parallèle N° 81401888.3 bénéficiant de la même date de priorité que la présente demande.

L'invention sera mieux comprise et d'autres avantages de celle-ci apparaîtront mieux à la lumière de la description qui va suivre de plusieurs modes de réalisation d'un dispositif de distribution hydraulique conforme à l'invention donnée uniquement à titre d'exemple et faite en référence aux dessins annexés dans lesquels :

La figure 1 représente une vue générale en coupe partielle d'un dispositif formant valve de distribution, selon l'invention, pour un système de direction assistée de véhicule ;

La figure 2 est un schéma illustrant le circuit hydraulique de ce système de direction assistée, utilisant la valve de distribution de la figure 1 ;

La figure 3 est une vue développée des deux éléments de distribution de la valve de la figure 1 avec, sur la partie droite en considérant le dessin, une vue schématique en coupe de l'élément de distribution le plus externe coopérant avec le boîtier fixe de la valve auquel sont raccordés, selon une représentation schématique, les autres parties du circuit hydraulique de la figure 2 ;

La figure 4 est une section IV-IV de la figure 3 ;

La figure 5 est une vue analogue à celle de la figure 3, d'une première variante possible et,

la figure 6 est une vue analogue à celle de la figure 3, d'une seconde variante possible.

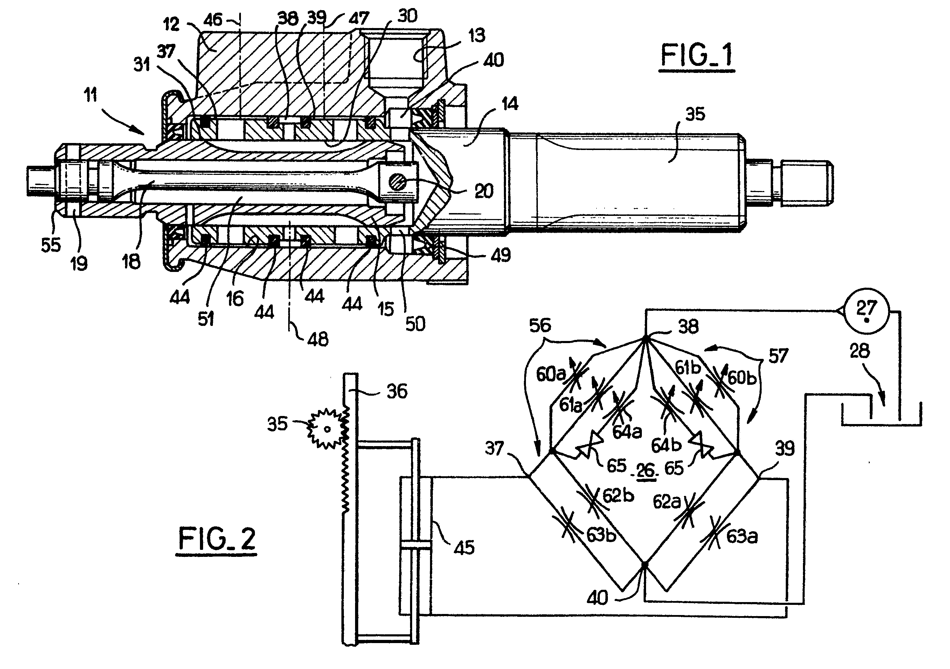

En se reportant à la figure 1, le dispositif de distribution 11 selon l'invention comporte essentiellement un boîtier 12 fixe, muni d'embouts de raccordement tels que, par exemple, l'embout 13 et comportant un alésage 16 abritant deux éléments de distribution de fluide 14 et 15 cylindriques et coaxiaux, comportant chacun une partie en forme de manchon. De façon classique, l'élément de distribution 15, le plus interne, est guidé en rotation dans le manchon formé par l'élément de distribution 14, le plus externe tandis que l'espace interne du manchon formé par l'élément de distribution 15 abrite une barre de torsion 18 connectée, par l'une de ses extrémités, à l'élément de distribution 15 par une goupille 19 et, par son autre extrémité, à l'élément de distribution 14 par une goupille 20. Cette barre de torsion constitue donc, de façon bien connue, un moyen de rappel en position relative neutre autorisant une rotation limitée, de quelques degrés, d'un élément de distribution par rapport à l'autre autour de leur axe commun (confondu avec celui de la barre de torsion 18) et de part et d'autre de ladite position relative neutre. En outre, les éléments de distribution comportent aussi des ouvertures et des cavités dont l'agencement complexe sera décrit plus en détail en référence aux Figures 2 à 4, et qui définissent un circuit de circulation de fluide 26 (voir Figure 2) entre une source de fluide telle qu'une pompe 27 et un réservoir de fluide 28. On notera seulement à ce stade de la description que les ouvertures et cavités précitées coopèrent pour former des passages à section variable opérant par recouvrement des surfaces cylindriques en contact 30 et 31 des éléments de distribution 14 et 15, respectivement lors d'une rotation relative limitée précitée. Le dispositif de distribution 11 étant plus particulièrement destiné à un système de direction assistée, le manchon externe formant l'élément de distribution 14 est prolongé par un arbre de sortie 35 destiné à être couplé, par exemple, à une crémaillère 36 (voir figure 2) d'un mécanisme de direction de roues. Cet élément de distribution 14, appelé aussi stator, est guidé en rotation dans l'alésage 16 et des espaces annulaires (37, 38, 39, 40) adjacents longitudinalement, sont individualisés entre la surface externe de l'élément de distribution 14 et la surface de l'alésage 16, au moyen de joints d'étanchéité annulaires 44 et 49, pour former des parties du circuit de circulation de fluide 26 et notamment deux prises de pression de travail, confondues avec les espaces annulaires 37 et 39 et destinées à être reliées aux deux chambres de pression d'un moteur hydraulique d'assistance tel qu'un vérin à double effet 45 (figure 2) lié à la crémaillère 36. Les espaces annulaires 37 et 39 sont en communication avec le vérin 45 au moyen d'embouts de raccordement du boîtier 12, non visibles sur la figure 1, mais symbolisés par les traits d'axe 46 et 47, respectivement. De façon analogue, l'espace annulaire 38 est raccordé à la sortie de la pompe 27 par un embout de raccordement du boîtier 12 symbolisé par le trait d'axe 48, l'ensemble constituant les moyens de raccordement à la source de fluide, cités plus haut. L'espace 40 (délimité à l'une de ses extrémités par le joint d'étanchéité 49) communique avec l'embout de raccordement 13 qui constitue la sortie de retour au réservoir 28. Des trous radiaux 50 dans l'élément 14 mettent l'espace 40 en communication avec l'espace interne 51 de l'élément de distribution 15, dans lequel est logé la barre de torsion 18. L'élément de distribution 15, le plus interne, est encore appelé rotor car il est destiné à être connecté par son extrémité axiale 55 à la colonne de direction (non représentée) d'un véhicule.

On va maintenant décrire le circuit de circulation de fluide 26 en référence aux figures 2 à 4. De façon classique, ce circuit se compose essentiellement de deux branches parallèles 56, 57 munies des passages à section variable précités. On distingue deux types de passage à sens de variation d'ouverture inversés pour un sens quelconque de ladite rotation relative au-delà de la position relative neutre précitée des deux éléments de distribution 14 et 15. Dans cette position neutre, la barre de torsion 18 ne subit aucune contrainte. Dans la suite de la description, les passages de l'un ou l'autre type seront différenciés par des références numériques portant les indices « a » ou « b », respectivement. Ainsi, selon une particularité de l'invention, on distingue deux passages 60a, 61a dans la branche 56 agencés en parallèle entre l'espace annulaire 38 d'alimentation en fluide et la prise de pression 37 et deux passages 62a, 63a dans la branche 57 agencés en parallèle entre la prise de pression 39 et l'espace annulaire 40 de retour au réservoir, (voir figure 2). De façon analogue, on distingue deux passages 60b, 61b dans la branche 57, agences en parallèle entre l'espace annulaire 38 et la prise de pression 39 ainsi que deux passages 62b, 63b, dans la branche 56 agencés en parallèle entre la prise de pression 37 et l'espace annulaire 40. Ainsi, chaque branche 56 ou 57 comporte des passages à section variable des deux types (indices « a » et « b ») montés en série entre la source de fluide (pompe 27) et le réservoir 28 et une portion de circuit entre des passages de types différents communique avec une prise de pression (37, 39) de la branche (56, 57, respectivement) considérée.

En outre, on distingue deux autres passages à section variable qui seront dénommés ci-après « passages pour hautes pressions », un passage 64a dans la branche 56 et un passage 64b dans la branche 57. Le passage 64a est monté en série avec une restriction d'écoulement 65, à section d'écoulement constante, et l'ensemble constitué par ce passage et cette restriction est branché entre l'espace annulaire 38 et la prise de pression 37. Pareillement, le passage 64b est monté en série avec une restriction d'écoulement 65, à section d'écoulement constante, et l'ensemble constitué par ce passage et cette restriction est branché entre l'espace annulaire 38 et la prise de pression 39. On appelle les passages 64a et 64b des « passages pour hautes pressions » parce que leur fermeture complète, pour un sens de rotation relative correspondant, est déterminée à un angle pour lequel tous les autres passages du même type sont déjà fermés. Par exemple, la fermeture complète du passage 64a n'intervient qu'« après » celle des passages 60a, 61a, 62a, 63a, pour un sens de rotation relative donné et pendant cette ultime plage de rotation relative possible entre les éléments de distribution 14 et 15, le débit de fluide dans la branche 56 est essentiellement déterminé par les sections des passages 64a et 65. On notera que sur cette plage mettant en jeu des pressions de fonctionnement relativement élevées, l'écoulement de fluide est totalement interrompu entre la prise de pression 39 et l'espace annulaire 40 tandis que la chute de pression entre l'espace annulaire 38 et la prise de pression 37 (dont la pression est très proche de celle du réservoir 28 à cause de l'ouverture des passages 62b, 63b) est totalement assurée par le débit de fluide au travers des passages 64 et 65 branchés en série. Une perte de charge notable apparaît ainsi aux bornes de la restriction 65 de la branche 56. Cette contre-pression aux bornes de la restriction 65 permet de repousser le seuil de cavitation dans le passage 64a et donc de repousser également le seuil de fonctionnement bruyant du distributeur, lequel seuil dépend avantageusement de la valeur de la contre-pression. Ainsi, une contre-pression de quelques bars suffit à repousser le seuil de fonctionnement bruyant à plusieurs dizaines de bars en amont du passage 65 correspondant. Le bruit de fonctionnement est ainsi éliminé sur toute la plage de rotation relative des éléments du distributeur, c'est-à-dire sur toute la gamme de pression de manœuvre du vérin 45. Pareillement la fermeture complète du passage 64b n'intervient qu'« après » celle des passages 60b, 61b, 62b, 63b, et il va de soi que tout ce qui a été décrit ci-dessus en référence au passage 64a et à la restriction 65 dans la branche 56 est valable pour le passage 64b et la restriction 65 dans la branche 57, pour l'autre sens de rotation relative.

Il est avantageux de placer le branchement en série du passage pour hautes pressions (64a, respectivement 64b) et de la restriction 65 en amont du vérin 45 car, avec un tel agencement, le système anti-bruit est sans influence sur la pression de repos ce qui réduit sensiblement la dérive en conduite en ligne droite et à grande vitesse, notamment si le vérin d'assistance utilisé est dissymétrique.

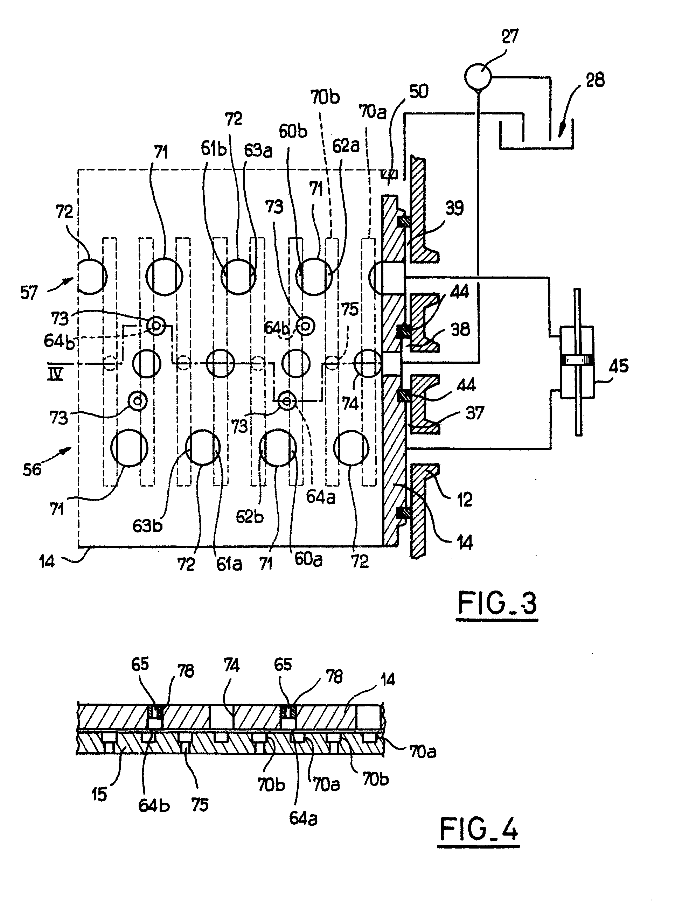

Les figures 3 et 4 montrent comment sont réalisées les différents passages et restrictions d'écoulement constituant le circuit de circulation de fluide 26.

L'élément de distribution 15, formant rotor, est muni de huit rainures longitudinales 70 creusées dans sa surface cylindrique externe 31 et fermées à leurs extrémités axiales. Ces rainures sont régulièrement angulairement décalées de 45° les unes par rapport aux autres. Quatre rainures 70a ou rainures d'amenée de fluide, sont fermées et disposées en permanence en regard de trous à contour circulaire 74 de l'élément de distribution 14 qui communiquent avec l'espace annulaire 38 relié à la pompe 27. Quatre autres rainures 70b, ou rainures d'évacuation de fluide, sont disposées en alternance avec les rainures 70a et percées de trous 75 établissant la communication avec l'espace interne 51 abritant la barre de torsion 18, c'est-à-dire avec le réservoir 28 via les trous d'évacuation 40 et l'embout 13.

L'élément de distribution 14 ne comporte quant à lui que des trous à contour circulaire 71, 72, 73 pour matérialiser tous les passages à section variable précités, opérant par chevauchement partiel desdites rainures et desdits trous.

Cette particularité de l'invention est avantageuse car elle permet d'éliminer le façonnage par électro-érosion des ouvertures pratiquées à travers l'élément de distribution 14. Selon l'invention, on peut néanmoins adapter la caractéristique « Pression-Angle de rotation relative » du distributeur à toute loi de variation voulue par le fait que des passages d'un même type sont agencés en parallèle dans une même branche 56 ou 57 du circuit 26 avec des sections d'écoulement différentes au moins pour une plage de rotation relative entre les deux éléments de distribution autour de la position relative neutre. On obtient ainsi une loi de variation voulue entre l'accroissement de pression disponible à l'une des prises de pression et l'angle de rotation relative dans le sens correspondant, par un choix judicieux d'une combinaison d'ouvertures à sections d'écoulement différentes, ces sections d'écoulement différentes étant par exemple considérées à la position relative neutre des éléments du distributeur. Dans le mode de réalisation des figures 3 et 4, les différences de section d'écoulement entre passages 60, 61 (ou 62, 63) sont simplement obtenues par des différences de diamètre entre les trous 71 et 72 correspondants. En effet, certains passages de types différents d'une même branche (60a, 62b) ou (61a, 63b) sont agencés par paires et une paire est définie par la coopération d'un trou du stator 14 (71 ou 72, respectivement) avec deux rainures 70a, 70b, adjacentes, communiquant respectivement avec la pompe 27 et le réservoir 28, ledit trou étant équidistant des deux rainures dans la position relative neutre illustrée notamment à la figure 3. On conçoit donc qu'avec un tel agencement, une simple différence de diamètre des trous 71 et 72, conditionne entièrement les sections d'écoulement des passages 60a, 62b, 61a, 63b, les uns par rapport aux autres. Dans l'exemple illustré à la figure 3, les uns par rapport aux autres. Dans l'exemple illustré à la figure 3, les trous 71 ont un diamètre supérieur au trou 72. En revanche, les passages pour hautes pressions précités, (64a ou 64b) ne sont pas agencés par paires mais simplement matérialisés par la coopération d'un trou 73 avec une bordure de l'une des rainures 70a, la bordure étant choisie en fonction du sens de variation des sections recherchées. Plus précisément, pour chaque branche 56, 57, un trou 73 de l'un desdits passages pour hautes pressions coopère avec une bordure de rainure 70a qui matérialise aussi le passage de même type (60a, respectivement 60b) de l'une des paires de passages précitée en coopération avec un trou 71 chevauchant partiellement deux rainures 70a, 70b, adjacentes. Bien entendu, le positionnement des trous 73 par rapport aux rainures 70a est tel que la fermeture complète des passages 64 est déterminée à un angle de rotation relative pour lequel tous les autres passages du même type sont fermés, comme mentionné précédemment. D'autre part, le diamètre des trous 73 est notablement inférieur à celui des trous 71 et 72 de sorte qu'ils ne peuvent jamais communiquer avec les rainures 70b adjacentes.

On a déterminé que la combinaison de deux et de préférence, 3 passages de sections initiales différentes, définis par la coopération de rainures rectilignes du rotor et de trous à contour circulaire du stator, permettait d'obtenir une caractéristique « Pression-Angle de rotation relative » convenable, notamment, approximativement parabolique comparable à ce qui était obtenu avec une combinaison de passages à section variable dont certains comportaient des fenêtres de forme rectangulaire à bordure non rectiligne et nécessitant la mise en œuvre de phases d'usinages par électroérosion. D'autre part, chaque restriction d'écoulement 65 précitée est formée dans le stator 14 par une portion tubulaire 78, ou bague, de section intérieure déterminée, obturant partiellement, sur une partie de sa profondeur, le trou 73 du passage pour hautes pressions 64a ou 64b avec lequel elle est montée en série (voir figure 4). Enfin, il faut noter une autre particularité de structure simplifiant la fabrication. Chaque branche 56, 57 selon le mode de réalisation des figures 3 et 4 comporte en fait le double de passages à sections variables par rapport à la représentation schématique de la figure 2. Autrement dit, chaque branche 56 ou 57 est pourvue de deux séries identiques de paires de passages précités et de deux passages pour hautes pressions (64a ou 64b), lesdits trous à contour circulaire (71, 72, 73) de même diamètre étant diamétralement opposés deux à deux sur l'élément de distribution cylindrique 14 qui les porte. Ainsi, on compte deux trous 71, deux trous 72, deux trous 73 par branches 56 ou 57 de sorte que l'usinage du stator 14 est essentiellement composé d'opérations de perçage extrêmement simples, suivant des diamètres du manchon 14. Dans le même esprit, il est à noter que les trous 74 sont aussi à contour circulaire et deux à deux diamétralement opposés.

Le fonctionnement de la valve de distribution est le suivant. Si on suppose que l'utilisateur sollicite le rotor 15 en rotation dans le sens des aiguilles d'une montre, tous les passages portant l'indice « a » vont se fermer et tous les passages portant l'indice « b » vont s'ouvrir. Le diamètre des trous 71 étant supérieur à celui des trous 72, se sont les passages 61a de la branche 56 et 63a de la branche 57 qui se fermeront complètement en premier lieu. Ensuite, pour une rotation relative supplémentaire des deux éléments du distributeur, on aboutira à une fermeture complète des passages 60a et 62a. Pendant toute cette course de rotation relative, l'augmentation de pression à la prise de pression 39 évolue suivant une courbe prédéterminée en fonction de l'angle de rotation relative (notamment une courbe sensiblement parabolique) cette courbe résultant du choix des diamètres des trous 71, 72, et 73 et du positionnement particulier des trous 73. Pour une rotation relative supplémentaire dans le même sens, toute communication entre la prise de pression 39 et le réservoir 28 est interrompue donc pas de cavitation dans cette branche et, dans la branche opposée 56, la chute de pression entre l'espace annulaire 38 relié à la pompe 27 et la prise de prise de pression 37 est totalement assurée par le débit de fluide au travers du passage 64a et de la restriction 65 en série avec lui, comme mentionné précédemment. La cavitation est évitée dans cette partie de la branche 56 par l'apparition d'une contre-pression en amont de la restriction 65, de sorte que le fonctionnement reste silencieux même dans ces conditions de fonctionnement à hautes pressions correspondant notamment aux manœuvres de garage du véhicule équipé d'un tel système de direction assistée.

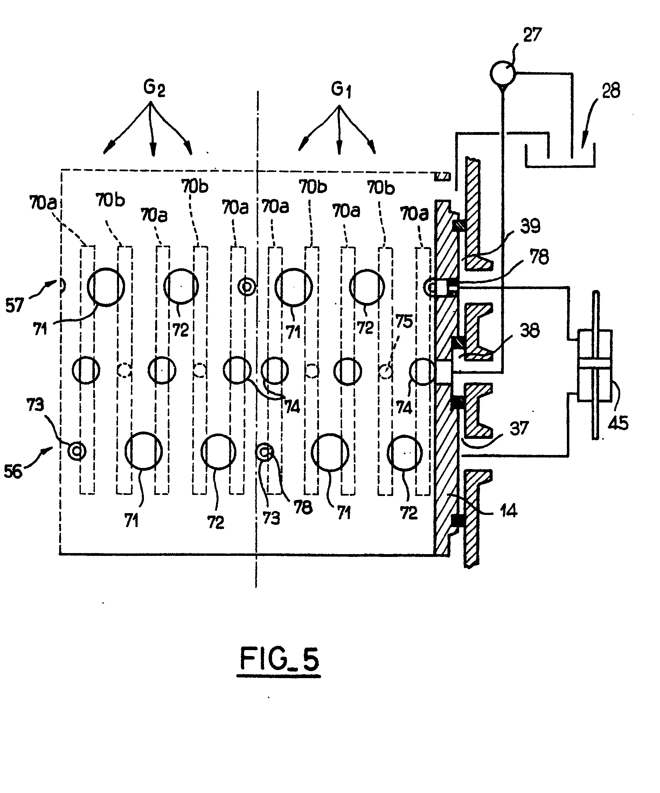

Le mode de réalisation schématisé à la figure 5, dans laquelle les éléments de structure déjà décrits portent les mêmes références numériques, est particulièrement adapté pour un modèle de distributeur à encombrement axial réduit. Dans ce cas, il est nécessaire de prévoir des rainures d'amenée de fluide 70a spécifiques pour définir les passages pour hautes pressions mentionnés plus haut, de façon à obtenir une meilleure répartition des débits dans le circuit de distribution et limiter les pertes de charge. Autrement dit, il n'est plus souhaitable, lorsqu'on atteint un degré de miniaturisation poussé, de définir certains passages de même type (tels que 60a et 64a en référence à la figure 3, par exemple) à partir d'une même rainure d'amenée de fluide. Selon le mode de réalisation de la figure 5, on prévoit donc dix rainures : six rainures d'amenée de fluide 70a communiquant par des trous 74 pratiqués dans le stator 15 avec l'espace annulaire 38 et quatre rainures d'évacuation de fluide 70b communiquant comme précédemment avec le réservoir 28. Ces rainures sont réparties en symétrie circulaire à la surface externe du rotor 14, alternativement en deux groupes $G_1$ et $G_2$ comportant chacun trois rainures 70a et deux rainures 70b. Par ailleurs, pour chaque branche 56 ou 57, l'une des rainures d'amenée de fluide 70a d'un groupe $G_1$ ou $G_2$ coopère exclusivement avec un trou 73 de l'un des passages pour hautes pressions (64a ou 64b) précités tandis que les deux autres rainures 70a de ce même groupe coopèrent respectivement avec les deux autres rainures 70b d'évacuation de fluide et avec les trous 71 et 72 de diamètres différents, pour définir les deux paires de passages à sections variables, de façon comparable à ce qui a été expliqué en référence à la figure 3.

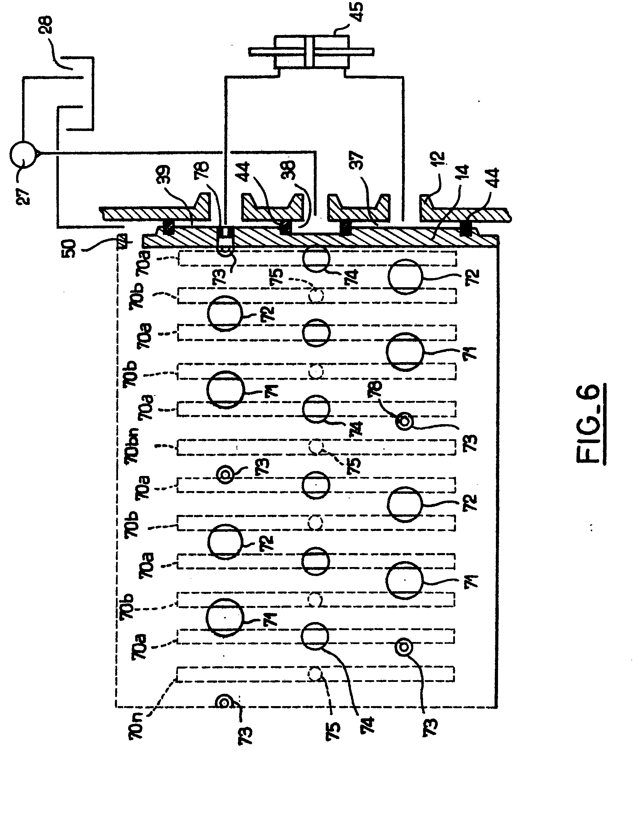

Pour des raisons d'équilibrage des deux éléments 14 et 15 du distributeur, on pourra préférer le mode de réalisation de la figure 6 qui comporte douze rainures tout en conservant le même principe de distribution que celui qui est schématisé à la figure 5. Selon cette nouvelle variante, on prévoit alors six rainures d'amenée de fluide 70a et six rainures d'évacuation de fluide 70b réparties alternativement en symétrie circulaire à la surface du rotor 15. Pour chaque branche 56 ou 57, on a donc deux rainures 70a qui coopèrent respectivement et exclusivement avec deux trous 73 de cette branche, de façon à définir les passages pour hautes pressions définis plus haut, tandis que les quatre autres rainures 70a coopèrent respectivement avec quatre rainures d'évacuation de fluide 70b et avec les trous 71, 72 de diamètres différents pour définir les deux séries de deux paires de passages, de façon analogue aux modes de réalisation des figures 3 et 5. Les deux dernières rainures d'évacuation de fluide 70bn, ou rainures neutres, ne coopèrent avec aucun trou du stator 15. En fonctionnement, particulièrement aux hautes pressions, l'agencement des rainures dans lesquelles règnent la haute pression de la pompe et la basse pression du réservoir, en alternance régulièrement à la surface du rotor, permet de réduire très sensiblement les effets de « collage » du rotor sur le stator.

## Revendications

1. Dispositif de distribution hydraulique pour servomécanisme, notamment pour direction assistée, du type comportant deux éléments de distribution de fluide (14, 15), cylindriques, coaxiaux et susceptibles d'une rotation relative limitée autour de leur axe commun de part et d'autre d'une position relative neutre, ces éléments de distributions (14, 15) comportant des ouvertures et cavités définissant un circuit de circulation de fluide (26) connectable entre une source de fluide (27) et un réservoir de fluide (28), ce circuit comportant deux branches (56, 57) de distribution agencées en parallèle, munies de passages à section variable (60-64) définis dans les surfaces cylindriques de contact desdits éléments de distribution (14, 15) et comportant notamment, dans chaque branche (56, 57), deux types (a, b) de passages à sens de variation d'ouverture inversés pour un sens quelconque de ladite rotation relative au-delà de ladite position relative neutre, des passages de ces deux types (a, b) communiquant avec une prise de pression de travail (37, 39) de la branche considérée, caractérisé en ce que les passages à section variable (60-64) précités sont tous matérialisés par le chevauchement partiel de rainures longitudinales (70a, 70b) creusées dans une surface cylindrique de l'un (15) des éléments de distribution et de trous (71, 72, 73) à contour circulaire pratiqués radialement au travers de l'autre élément (14) de distribution, et en ce que des passages d'un même type (« a » ou « b ») sont agencés en parallèle dans une même branche (56, 57) dudit circuit avec des sections d'écoulement différentes au moins pour une plage de rotation relative entre les deux éléments de distribution (14, 15) autour de ladite position relative neutre, pour obtenir une loi de variation voulue entre l'accroissement de pression disponible à l'une desdites prises de pression (37, 39) et l'angle de rotation relative dans le sens correspondant.

2. Dispositif selon la revendication 1, caractérisé en ce que des passages de types différents d'une même branche (56, 57) étant agencés par paires, une paire est définie par la coopération d'un trou (71 ou 72) précité avec deux rainures parallèles adjacentes (70a, 70b) dont l'une (70a) communique avec des moyens de raccordement (38) à ladite source de fluide et l'autre (70b) avec des moyens de raccordement (40) audit réservoir de fluide (28).

## Claims

1. A hydraulic distribution device for a servo mechanism, in particular for a servo steering system, of the type comprising a pair of cylindrical, coaxial fluid distribution elements (14, 15) adapted to perform a limited relative rotation about their common axis in either direction from a relative neutral position, said distribution elements (14, 15) comprising openings and cavities defining a fluid circuit (26) connectable between a fluid source (27) and a fluid reservoir (28), said circuit comprising a pair of distribution branches (56, 57) connected in parallel and provided with passages (60-64) having a variable cross section, defined in the cylindrical surface of contact of said distribution elements (14, 15) and comprising in each branch (56, 57) two types (a, b) of passages having opposite opening senses in either direction of relative rotation from said relative neutral position, passages of the two types (a, b) communicating with a work pressure connection (37, 39) of the considered branch, characterized in that the said passages of variable cross section (60-64) are all formed by a partial overlapping of longitudinal grooves (70a, 70b) in a cylindrical surface of one (15) of the distribution elements and circular openings (71, 72, 73) radially extending through the other distribution element (14), and in that passages of the same type (« a » or « b ») are connected in parallel in one of said branches (56, 57) of the said circuit, while having different flow cross sections for at least one stroke of relative rotation between the two distribution elements (14, 15) from said relative neutral position in order to obtain a desired law of variation between the pressure increase available at one of said work pressure connections (37, 39) and the angle of relative rotation in the corresponding direction.

2. The device of claim 1, characterized in that, passages of different types of one same branch (56, 57) being disposed in pairs, one pair is defined by the cooperation of one of said openings (71 or 72) with a pair of adjacent parallel grooves (70a, 70b), one of which (70a) communicates with connection means (38) at said fluid source and the other of which (70b) communicates with connection means (40) of said fluid reservoir (28).

## Ansprüche

1. Hydraulische Verteilungseinrichtung für einen Servomechanismus, insbesondere für eine Servolenkung, mit zwei zylindrischen, koaxialen Verteilungselementen, die aus einer relativen Neutralstellung in der einen und anderen Richtung eine begrenzte Relativdrehung um ihre gemeinsame Achse ausführen können, wobei die Verteilungselemente (14, 15) Öffnungen und Hohlräume aufweisen, die einen zwischen einer Strömungsquelle (27) und einem Reservoir (28) anschließbaren Strömungsmittelkreis bilden, wobei der Strömungsmittelkreis zwei parallel geschaltete Zweige (56, 57) aufweist, die mit querschnittsveränderlichen Kanälen (60-64) versehen sind, die in den zylindrischen Berührungsflächen der Verteilungselemente (14, 15) gebildet sind und in jedem Zweig (56, 57) zwei Arten von Kanälen aufweisen, die einen entgegengesetzten Öffnungssinn für jede beliebige Drehrichtung aus der relativen Neutralstellung heraus haben, wobei Kanäle dieser beiden Arten (a, b) mit einem Arbeitsdruckanschluß (37, 39) des betrachteten Zweiges verbunden sind, dadurch gekennzeichnet, daß die besagten querschnittsveränderlichen Kanäle sämtlich durch eine teilweise Überdeckung von längs verlaufenden Nuten (70a, 70b), die in einer zylindrischen Fläche eines (15) der Verteilungselemente ausgearbeitet sind, und kreisförmigen Löchern (71, 72, 73), die radial verlaufend im anderen Verteilungselement (14) eingearbeitet sind, gebildet werden, und daß Kanäle derselben Art (« a » oder « b ») parallel geschaltet im selben Zweig (56, 57) des Strömungsmittelkreises mit unterschiedlichen Strömungsquerschnitten für mindestens eine Relativdrehung zwischen den beiden Verteilungselementen (14, 15) aus der relativen Neutralstellung angeordnet sind, um ein gewünschtes Änderungsgesetz zwischen der zur Verfügung stehenden Druckzunahme an einem der Druckanschlüsse (37, 39) und dem relativen Drehwinkel in dem entsprechenden Drehsinn zu erhalten.

2. Verteilungsvorrichtung nach Anspruch 1, dadurch gekennzeichnet, daß Kanäle unterschiedlicher Art eines selben Zweiges (56, 57) paarweise angeordnet sind und ein Paar durch Zusammenwirken eines der besagten Löcher (71, 72) mit zwei angrenzenden parallelen Nuten (70a, 70b) gebildet wird, von denen die eine (70a) mit Anschlußmitteln (38) der Strömungsmittelquelle und die andere (70b) mit Anschlußmitteln (40) des Strömungsmittelreservoirs (28) in Verbindung steht.

FIG_1

FIG_2

0 053 559

FIG. 3

FIG. 4

0 053 559

FIG_5

FIG.6